# EUROPÄISCHE PATENTSCHRIFT

(11) **EP 1 290 325 B1**
(45) Veröffentlichungstag und Bekanntmachung des Hinweises auf die Patenterteilung: **05.04.2006**
(21) Anmeldenummer: 01943130.3
(22) Anmeldetag: 22.05.2001
(51) Int. Cl.: F02F 3/12, F02F 3/14

(54) **KOLBEN FÜR DIESELMOTOREN**
DIESEL ENGINE PISTON
PISTON POUR MOTEURS DIESEL

(30) Priorität: 16.06.2000 DE 10029810
(43) Veröffentlichungstag der Anmeldung: 12.03.2003
(73) Patentinhaber: MAHLE GMBH, D-70376 Stuttgart (DE)
(72) Erfinder: BISCHOFBERGER, Ulrich, 73732 Esslingen (DE); SANDER, Wilfried, 74172 Neckarsulm (DE); ULLRICH, Michael, 71696 Möglingen (DE)
(74) Vertreter: Pohle, Reinhard
(86) Internationale Anmeldenummer: PCT/DE2001/001941
(87) Internationale Veröffentlichungsnummer: WO 2001/096726

(56) Entgegenhaltungen:
- DE-U- 29 600 036
- GB-A- 1 478 293
- US-A- 5 352 538
- PATENT ABSTRACTS OF JAPAN vol. 008, no. 005 (M-267), 11. Januar 1984 (1984-01-11) & JP 58 167849 A (HINO JIDOSHA KOGYO KK), 4. Oktober 1983 (1983-10-04)
- PATENT ABSTRACTS OF JAPAN vol. 008, no. 040 (M-278), 21. Februar 1984 (1984-02-21) & JP 58 195050 A (YANMAR DIESEL KK), 14. November 1983 (1983-11-14)

## Beschreibung

Die Erfindung betrifft einen Kolben für Dieselmotoren nach dem Oberbegriff des Anspruchs 1.

Es ist aus dem SAE-Paper 860888 "In-Service Performance of Ceramic and Metallic Coatings in Diesel Engines" an sich bekannt, daß bei Diesel-Kolben durch Beschichtung des Kolbenbodens mit MCrAlY-Plasmaspritzschichten Korrosion verhindert werden kann. Allerdings sind die dort vorgestellten Ergebnisse reine Forschungsergebnisse und haben bisher keinen Eingang in die Praxis gefunden und es sind die zum Korrosionsschutz angegebenen Spritzschichten immer im Zusammenhang mit Schichten aus Zirkondioxid betrachtet worden, für die sie als Haftschicht und Korrosionsschutzschicht wirken. Es werden in dem SAE-Paper keine näheren Angaben zur Ausführung der Schicht gemacht.

Die Erfindung beschäftigt sich daher mit dem Problem, derartige Spritzschichten auch im Hinblick auf eine wirtschaftliche Herstellung serientauglich zu machen.

Dieses Problem wird gelöst durch das kennzeichnende Merkmal des Anspruchs 1. Vorteilhafte Weiterbildungen sind Gegenstand der Unteransprüche.

Ein gattungsgemäßer Kolben ist auch aus der DE 29600036 bekannt. Bei diesem Kolben soll ein Verzundern des Kolbenbodens und der Verbrennungsmulde dadurch verhindert werden, daß eine Schicht aus einer Aluminiumlegierung oder aus Keramik, insbesondere aus Zirkondioxid oder anderen temperaturbeständigen Oxiden auf dem Kolbenboden aufgebracht wird.

Lediglich optional wird dort auf dem Kolbenboden zwischen Keramikschicht und Grundmaterial noch eine Korrosionsschutzschicht aus einer NiCrAl-Legierung aufgebracht.

Die Herstellung einer derartigen Beschichtung, bestehend aus einer Keramikschicht und einer weiteren Schicht aus einer Legierung ist aufwendig, zeitintensiv und daher teuer.

Erfindungsgemäße Beschichtungen weisen daher vorzugsweise keine zusätzliche Keramikbeschichtung auf, sondern bestehen ausschließlich aus einer MCrAlY-Schicht, wobei M stellvertretend für die Metalle Ni, Fe und Co steht.

Die Stärke der erfindungsgemäßen Spritzschicht variiert und ist im Bereich des Muldenrandes am größten, während sie auf dem Kolbenboden nach radial außen und in der Mulde zum Muldengrund hin abnimmt.

Insbesondere der Kolbenboden, aber auch die Mulde können im Bereich der Beschichtung durch Drehbearbeitung so ausgespart sein, daß die Beschichtung etwa bündig mit dem Kolbenboden abschließt, sodaß die Oberflächen des unbeschichteten Bereichs des Kolbenbodens und des beschichteten Bereichs in derselben Ebene liegen und sich dasselbe Kompressionsverhältnis wie beim unbeschichteten Kolben einstellt.

Die Schichtstärke liegt meist im Bereich von 50 µm - 500 µm, am Muldenrand vorzugsweise bei 200 µm - 400 µm. Als Verfahren zur Herstellung der Schicht wird das Plasmaspritzen bevorzugt.

Die Erfindung wird im folgenden anhand eines Ausführungsbeispiels näher erläutert. Es zeigt:

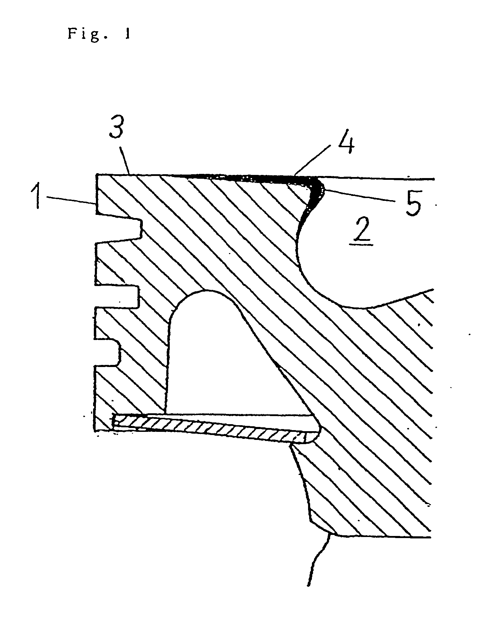

- Fig. 1: den Kolbenboden eines erfindungsgemäßen Kolbens.

Der aus Stahl bestehende Kolbenboden 1 weist eine Verbrennungsmulde 2 und eine dem Zylinderkopf zugewandte Oberfläche 3 auf. Eine die Oberfläche 3 und die Verbrennungsmulde 2 zumindest teilweise abdeckende Plasmaspritzschicht 4 weist im Bereich des Muldenrands 5 ihre größte Stärke auf und es nimmt die Schichtstärke nach radial außen und zum Muldengrund hin ab. Dabei ist die Spritzschicht nicht maßstäblich, sondern zur Verdeutlichung des Schichtstärkenverlaufs vergrößert dargestellt.

## Patentansprüche

1. Kolben für Dieselmotoren, bei dem zumindest der Kolbenboden aus Stahl besteht, mit einer Verbrennungsmulde und mit einer auf der dem Zylinderkopf zugewandten Oberfläche des Kolbenbodens und/oder in der Verbrennungsmulde durch thermisches Spritzen aufgebrachten Beschichtung aus einer NiCrAl-Legierung oder einer CoCrAl-Legierung, einer Mischung aus beiden Legierungen, oder einer FeCrAl-Legierung,
**dadurch gekennzeichnet,**
**daß** im Bereich des Muldenrands die größte Schichtstärke vorliegt und die Schichtstärke am Kolbenboden nach radial außen und in der Verbrennungsmulde zum Muldengrund hin abnimmt.

2. Kolben für Dieselmotoren nach Anspruch 1,
**dadurch gekennzeichnet,**
**daß** die Beschichtung als einzige thermische Spritzschicht auf dem Kolben vorliegt.

3. Kolben für Dieselmotoren nach Anspruch 1 oder 2,
**dadurch gekennzeichnet,**
**daß** die Beschichtungs-Legierung zusätzlich Yttrium enthält.

4. Kolben nach einem der vorhergehenden Ansprüche,
**dadurch gekennzeichnet,**
**daß** der Kolbenboden und die Verbrennungsmulde vor dem Beschichten etwa in dem Maße durch eine Drehbearbeitung ausgespart werden, die der jeweiligen Schichtstärke der später aufzubringenden Schicht entspricht, um dasselbe Verdichtungsverhältnis wie beim unbeschichteten Kolben zu erzielen.

## Claims

1. Piston for diesel engines, in which at least the piston crown is made of steel, with a combustion cavity and a coating of a NiCrAl alloy or a CoCrAl alloy, a mixture of both alloys, or an FeCrAl alloy applied to the surface of the piston crown that faces the cylinder head and/or in the combustion cavity by means of thermal spraying,
**characterised in that**
the greatest layer thickness is present in the region of the cavity edge, and the layer thickness decreases radially outwards on the piston crown and towards the cavity bottom in the combustion cavity.

2. Piston for diesel engines according to claim 1, **characterised in that** the coating is present as a single thermal sprayed layer on the piston.

3. Piston for diesel engines according to claim 1 or 2, **characterised in that** the coating alloy additionally contains yttrium.

4. Piston according to one of the previous claims, **characterised in that** the piston crown and the combustion cavity are recessed before the coating process, by means of turning work, approximately to such an extent that corresponds to the layer thickness of the layer to be applied later, in order to achieve the same compression ratio as in the case of the uncoated piston.

## Revendications

1. Dispositif de réglage d'aubes directrices pour un turbocompresseur à géométrie de turbine variable, comprenant une plaque support d'aubes directrices (7), plusieurs aubes directrices (6), qui sont assemblées avec des leviers (3) d'aubes directrices par l'intermédiaire d'axes (5) d'aubes directrices montés dans la plaque support (7), l'anneau de réglage (1) comportant des évidements (2) pour loger les extrémités des leviers (3) d'aubes directrices et l'anneau de réglage (7) étant guidé par rapport à la plaque support (7) d'aubes directrices, **caractérisé en ce que** l'anneau de réglage (1) comporte des ergots (10) en saillie dans la direction axiale, dont l'un au moins provoque le guidage radial de l'anneau de réglage (1) sur la plaque support (7) des aubes directrices.

2. Dispositif de réglage d'aubes directrices suivant la revendication 1, **caractérisé en ce que** les ergots se situent dans la zone de plusieurs ou de tous les évidements (2).

3. Dispositif de réglage d'aubes directrices suivant l'une des revendications 1 et 2, **caractérisé en ce que** la plaque support (7) des aubes directrices présente une gorge tournée dans la masse (11), sur laquelle est guidé l'anneau de réglage (1) dans la direction radiale.

4. Dispositif de réglage d'aubes directrices suivant la revendication 3, **caractérisé en ce que** la gorge tournée dans la masse (11) a une configuration bombée.
